# EUROPEAN PATENT APPLICATION

(11) **EP 3 354 323 A1**
(43) Date of publication of application: **01.08.2018**
(21) Application number: 18153718.4
(22) Date of filing: 26.01.2018
(51) Int. Cl.: A63B 23/04, G09B 9/058

(54) **CYCLE-SIMULATOR**

(30) Priority: 30.01.2017 IT 201700009791
(71) Applicant: Studio A.I.P. S.R.L., 21040 Oggiona con Santo Stefano (VA) (IT)
(72) Inventor: BRIVIO, Marco, I-21040 OGGIONA CON SANTO STEFANO (VA) (IT); BRIVIO, Paolo, I-21040 OGGIONA CON SANTO STEFANO (VA) (IT)
(74) Representative: Brasca, Marco

(57) **Abstract**

The object of the present invention is a cyclo-simulator, comprising: a base (2) to be rested on the ground; an ergometric brake (8) mounted on the base (2) and provided with or connected to at least one pinion (14) rotatable around a rotation axis (X); a test frame (19) comprising a pedal assembly (25), a saddle (21) and a handlebar (23) and adjusting devices (33, 34, 35, 36) of the relative position of the saddle (21) and handlebar (23) with respect to the pedal assembly (25). The test frame (19) is removably mounted on the base (2) and, when the test frame (19) is mounted on the base (2), the pedal assembly (25) is operatively connected/connectable to the pinion (14). The ergometric brake (8) or the base (2) comprises hooking/unhooking devices (15) configured to removably mount the test frame (19) on the base (2) and configured to removably mount a frame of a real bike (44) on the base (2) in place of the test frame (19) in such a way to connect pedals of the real bike frame (44) to said pinion (14). A measuring device (39) is attached or attachable to the base (2) and is configured to detect and/or indicate the position of points on a cyclist and/or on the real bike frame (44) and/or on the test frame (19).

## Description

### Field of the finding

The object of the present invention is a cyclo-simulator, i.e. a device for simulating the activity performed by a cyclist on a bicycle and intended for the execution of performance tests (e.g. for determining the anaerobic threshold) and/or of posture tests of a cyclist and/or for setting the correct measures of the bicycle which the cyclist will then use on the road and/or possibly also for training.

### Background of the finding

The public document US 2008/0058170 illustrates a stationary bike of adjustable type used for exercising or as a device adapted to set the correct position of a cyclist in the saddle, for the purpose of bicycle adjustment, based on anthropometric data of the cyclist. The stationary bike is provided with connections of adjustable type between the saddle and the frame and between the handlebar and the frame.

The public document EP2772286, on behalf of the same Applicant, illustrates a measuring device for monitoring the posture and/or the performances of a cyclist during pedaling, comprising a support structure configured to support a frame of a bicycle. The structure comprises a first attaching portion connected to a base for receiving a front fork of the bicycle, a second attaching portion connected to the base for receiving a rear fork of the bicycle and a mechanism arranged for receiving a torque transmitted by the bicycle. The first and second attaching portions are hinge-type constraints.

The public document M12014A001154, on behalf of the same Applicant, illustrates an apparatus for adjusting the frame of a bicycle, comprising: a base provided with means for attaching a bicycle to the base itself and a rod hinged to the base and provided with a first sensor configured to measure a tilt of the rod, a slider slidably mounted on the rod and bearing a pointer, a second sensor configured to measure a distance of the pointer from a point of reference along the longitudinal extension of the rod. The apparatus allows detecting and confirming a plurality of reference points of a cyclist placed in front of the hinged rod and detecting and confirming a plurality of reference points of a bicycle attached to the base.

In the cycling field, ergometric brakes are also known which are adapted to allow the cyclist to simulate pedaling on road, and due to particular instruments, to allow training and/or measuring the work performed by the athlete.

For example, the public document US 5656001 illustrates a bicycle provided with frame, saddle, pedals and handlebar, in which the drive wheel of the bicycle is connected via dragging to the braking system, with consequent collateral energy dispersions via friction and/or slipping of the wheel.

The public document US 2010/0179030 instead illustrates a cyclette provided with a free wheel made of diamagnetic material, connected to the pedals and rotatably mounted on a rear fork of the frame and with a set of permanent magnets mounted adjacent to the rear fork. The set of magnets exerts, on the free wheel, a magnetic force that can be adjusted by varying the position and the number of the magnets themselves.

### Summary

The Applicant has observed that the systems of known type, illustrated in brief above, do not allow setting the bicycle in the most objective and correct manner possible for a specific user/cyclist, in a manner such that the latter can best exploit his/her capacities and the bicycle available thereto.

In particular, the systems of known type do not allow detecting, with precision and objectivity, the behavior during pedaling and verifying objective data (such as the application of the force on the pedals over time) detected on the frame of the bicycle that is subsequently employed on road by the cyclist himself/herself. The systems of known type do not even allow precisely and quickly calculating, verifying and transferring the measures calculated from the frame of the stationary bike onto the frame of the real bike, so as to immediately place the cyclist in optimal conditions.

Indeed, for example, the stationary bike, like that illustrated in US 2008/0058170 (but also US 2010/0179030) possesses a very rigid frame that is structurally very different from that of the bicycles then used on road. In addition, any movement of such frame is substantially prevented, so that the cyclist who uses such stationary bike - even with the saddle and handlebar positions adjusted as those of the real bike must be - certainly cannot simulate the real action of pedaling. Such stationary bike is then unable to detect the forces exerted by the cyclist, and even if it was these would not reflect the forces that the cyclist would exert on the real bike, since the geometry and the rigidity of the stationary bike are totally different from those of the real bike.

The solution illustrated in the public document EP2772286 (and also US 5656001 and M12014A001154) employs the frame of the real bike which does not allow an easy adjustment of the positions of the points on which the cyclist operates and it cannot be used for finding the ideal position.

Therefore, an objective of the present invention is to propose a cyclo-simulator which allows setting, in the best and most objective way possible, the frame of a bicycle as a function of the characteristics and capacities of each cyclist.

Another objective of the present invention is to propose a cyclo-simulator which allows executing such custom-setting in the simplest and quickest manner possible.

Another objective of the present invention is to propose a method, which preferably exploits said cyclo-simulator, configured for custom-setting the frame of a bike as a function of the cyclist for whom it is intended.

The Applicant has found that the above-indicated objectives and still others can be attained by means of an integrated system constituted by an ergometric brake, by a suitably attached test frame and by a measuring device, wherein hooking/unhooking devices allow releasing the test frame from the integrated system in order to substitute it with the frame of the real bike of the cyclist or which the cyclist intends to acquire.

In particular, the indicated objectives and still others are substantially attained by a cyclo-simulator and by a method for setting a bicycle according to one or more of the appended claims and/or in accordance with one or more of the following aspects.

More specifically, according to one aspect, the present invention regards a cyclo-simulator, comprising:
- a base to be rested on the ground;
- an ergometric brake mounted or mountable on the base and preferably provided with or connected to at least one pinion rotatable around a rotation axis;
- a test frame comprising a pedal assembly, a saddle and a handlebar and adjusting devices for adjusting the relative position of said saddle and handlebar with respect to the pedal assembly; wherein the test frame is removably mounted on the base and wherein, when the test frame is mounted on the base, the pedal assembly is operatively connected/connectable to the ergometric brake, preferably by means of said at least one pinion;
wherein the ergometric brake or the base comprises hooking/unhooking devices configured to removably mount the test frame on the base and configured to removably mount a frame of a real bike on the base in place of the test frame in such a way to connect a pedal assembly of the real bike frame to said brake, preferably to said pinion.

Preferably, the cyclo-simulator also comprises a measuring device attached or attachable to the base and configured to detect and/or indicate the position of points on a cyclist and/or on the real bike frame and/or on the test frame.

In one aspect, the base can oscillate, preferably elastically, with respect to the ground.

In one aspect, the base comprises at least one first element directly restable on the ground and a second element mounted on the first element and bearing or configured to bear the ergometric brake.

In one aspect, the second element is attached to said at least one first element by means of elastic constraints.

In one aspect, the second element can elastically oscillate with respect to said at least one first element according to one or more degrees of freedom.

In one aspect, the cyclo-simulator comprises an auxiliary base configured to support a front fork of the test frame or of the real bike frame.

In one aspect, the auxiliary base can oscillate, preferably elastically, with respect to the ground.

In one aspect, the base comprises at least one first element directly restable on the ground and a second element mounted on the first element and configured to support a front fork of the test frame or of the real bike frame.

In one aspect, the second element is attached to said at least one first element by means of constraints, preferably elastic.

In one aspect, the second element can oscillate, preferably elastically, with respect to said at least one first element according to one or more degrees of freedom.

In one aspect, the ergometric brake comprises a frame that is fixed with respect to the base and a rotary body connected to the pinion and rotatably mounted on the fixed frame.

In one aspect, control devices are provided for controlling the ergometric brake in order to vary the force exerted by the ergometric brake.

In one aspect, the ergometric brake comprises: a rotor rotatable around a respective rotation axis and operatively connected or connectable to the pinion; a stator coaxial with the rotation axis and attached to a fixed frame; braking means operatively active between the rotor and the stator.

In one aspect, the ergometric brake comprises: at least one torsional load cell configured to detect the torque exchanged between the rotor and the stator; wherein the torsional load cell is part of the rotor and/or of the stator. The load cell is capable of reading the torque without friction or loss.

In one aspect, the pinion is mounted on the rotor and both rotate around the rotation axis.

In one aspect, the ergometric brake is configured to support one or more pinions also of standard type.

In one aspect, the ergometric brake comprises a shaft coaxial with the rotation axis and mounted integral with the fixed frame.

In one aspect, the hooking/unhooking devices are situated at opposite ends of the shaft, in order to allow the connection with a rear fork of the test frame or of the real bike frame.

In one aspect, the test frame comprises a first upright bearing the saddle and a second upright bearing the handlebar.

In one aspect, the first and the second upright form a V shape, in which the pedal assembly is positioned at a vertex of the V.

In one aspect, the test frame comprises a rear fork, preferably attached to the first upright.

In one aspect, the test frame comprises a front fork, preferably attached to the second upright.

The test frame is slender and light so as to have characteristics, including handiness, similar to those of a normal bicycle. The test frame is moved due to the elastic constraints and is deformed, due to the slenderness, while the cyclist is pedaling.

In one aspect, the adjusting devices are motorized and preferably comprise electrical or hydraulic actuators.

In one aspect, each of the adjusting devices comprises a motor unit and a displacement transducer.

In one aspect, at least the motor unit is removable from the test frame.

In one aspect, each motor unit comprises a motor and a worm screw.

In one aspect, the worm screw is housed in the test frame and the motor is, preferably, outside the test frame.

In one aspect, the motor is connected by means of a quick coupling to the frame.

In one aspect, the adjusting devices comprise: first adjusting devices at least partially housed in the first upright and operatively connected to the saddle in order to move the saddle along a direction substantially parallel to a longitudinal extension of the first upright.

In one aspect, the adjusting devices comprise: second adjusting devices at least partially housed in the second upright and operatively connected to the handlebar in order to move the handlebar along a direction substantially parallel to a longitudinal extension of the second upright.

In one aspect, the adjusting devices comprise: third adjusting devices operatively interposed between the saddle and the first upright and configured to move the saddle along a direction transverse to the longitudinal extension of the first upright. In one aspect, the adjusting devices comprise: fourth adjusting devices operatively interposed between the handlebar and the second upright and configured to move the handlebar along a direction transverse to the longitudinal extension of the second upright.

In one aspect, each of said first and second upright comprises a first tubular element which houses internally the worm screw of the respective motor unit and a second tubular element, preferably parallel to the first, which houses internally the displacement transducer of the respective motor unit.

In one aspect, the motor protrudes from the first tubular element at an opposite end to that bearing the saddle or the handlebar.

In one aspect, each of the third and fourth adjusting devices comprises a nut screw respectively arranged on the first or on the second upright, a structure, preferably box-like, respectively bearing the saddle or the handlebar, a motor mounted on the box-like structure, a worm screw rotatably attached to the box-like structure and rotated by the motor and engaged in the nut screw.

Attention is focused on the fact that the specific characteristics of the test frame and of the adjusting devices, described in the preceding aspects, may be the object of a separate invention in a possible divisional application, also in the absence of the other characteristics relative to the ergometric brake, to the base, to the measuring device. Such characteristics can also be provided on a frame of a real bike.

In one aspect, the cyclo-simulator comprises at least one sensor configured to detect at least one operating parameter of said cyclo-simulator.

In one aspect, said at least one sensor is operatively associated with the pedal assembly.

In one aspect, said at least one sensor is operatively associated with the ergometric brake and, preferably, comprises the torsional load cell.

In one aspect, the measuring device comprises at least one pointer and position and/or movement sensors configured to detect the position of the pointer.

In one aspect, the measuring device comprises: a support element removably attachable to the base; a rod hinged to the support element around a rotation axis, preferably parallel to the ground; a first sensor configured to measure a tilt of the rod; a slider slidably mounted on the rod and bearing a pointer, preferably laser, oriented in a direction parallel to the rotation axis; a second sensor configured to measure a distance of the pointer from a reference point along the longitudinal extension of the rod.

An operator rotates the rod and makes the slider slide along the rod to as to point, with the laser, the points whose coordinates one wishes to detect. Once the point to be detected has been sighted, the operator presses a button on the measuring device, e.g. on the slider itself, acquires the horizontal and vertical coordinates of said point placed in front of it.

In one aspect, the cyclo-simulator comprises an electronic control unit, e.g. a computer.

In one aspect the control unit is operatively connected to the measuring device and is configured to detect, by means of said measuring device, anthropometric measures of a cyclist and/or of the test frame and/or of the real bike frame.

In one aspect, the control unit is operatively connected to the first sensor and to the second sensor and configured at least to: receive, from the first sensor, first signals correlated to measures of tilt relative to reference points placed in front of the rod; receive, from the second sensor, second signals correlated to measures of longitudinal distance relative to said reference points.

In one aspect, the control unit is configured to calculate measures of the test frame as a function of anthropometric measures of the cyclist detected by said measuring device.

In one aspect, the control unit comprises a memory in which an algorithm lies that is configured to calculate measures of the test frame as a function of anthropometric measures of the cyclist.

In one aspect, the control unit is operatively connected to said adjusting devices for automatically adjusting the relative position of said saddle and/or handlebar with respect to the pedal assembly based on the calculated measures of the test frame.

In one aspect, the control unit is operatively connected to said at least one sensor for automatically adjusting the relative position of said saddle and/or handlebar with respect to the pedal assembly based on said at least one detected operating parameter.

In one aspect, the control unit is operatively connected to said control devices and is configured to vary the force exerted by the ergometric brake in order to simulate a route.

In one aspect, the control unit comprises a memory in which an algorithm lies that is configured to calculate at least one parameter indicative of the performances of the cyclist.

In one aspect, the present invention also regards a method for setting a bicycle, preferably by means of the above-described and/or claimed cyclo-simulator, comprising:
▪ detecting anthropometric measures of a cyclist by means of the measuring device;
▪ calculating, preferably through the control unit, measures of the test frame as a function of the anthropometric measures of the cyclist;
▪ adjusting through the motorized adjusting devices the relative position of the saddle and/or handlebar with respect to the pedal assembly based on the calculated measures of the test frame.

In one aspect, the method comprises:
▪ detecting at least one operating parameter of the cyclo-simulator by means of said at least one sensor while the cyclist is pedaling on the test frame;
▪ adjusting through the motorized adjusting devices the relative position of the saddle and/or handlebar with respect to the pedal assembly based on said at least one detected operating parameter.

In one aspect, provision is made for
▪ substituting, by operating on the hooking/unhooking devices, the test frame with the frame of a real bike;
▪ adjusting the relative position of the saddle and/or handlebar with respect to the pedal assembly of the real bike by means of indications supplied by the measuring device, wherein said positions correspond to those of the test frame.

In one aspect, provision is made for detecting at least one operating parameter of the cyclo-simulator while the cyclist is pedaling on the real bike.

In one aspect, provision is made for comparing said at least one operating parameter of the cyclo-simulator detected while the cyclist is pedaling on the real bike with said at least one operating parameter of the cyclo-simulator detected while the cyclist is pedaling on the test frame in order to execute a check.

In one aspect, provision is made for detecting the anthropometric measures of a cyclist by means of the measuring device, by mounting the measuring device on the base, preferably without the test frame or the real bike being installed on said base.

In one aspect, provision is made for adjusting the relative position of the saddle and/or handlebar of the test frame based on the measures of the test frame calculated from the anthropometric measures of the cyclist while the test frame is released from the base and is operatively connected to the control unit. These calculated positions are the starting positions that are then refined/optimized by means of the remaining procedure.

In one aspect, it is provided to mount the test frame on the base, preferably after having dismounted the measuring device from the base, in order to then detect said at least one operating parameter of the cyclo-simulator while the cyclist is pedaling on the test frame.

In one aspect, provision is made for adjusting the relative position of the saddle and/or handlebar with respect to the pedal assembly based on said at least one detected operating parameter while the cyclist is pedaling on the test frame or at the end of the test.

In one aspect, provision is made for adjusting the relative position of the saddle and/or handlebar with respect to the pedal assembly of the real bike by means of the pointer which indicates the positions of the points to be transferred from the test frame to the real bike frame.

The Applicant has verified that the cyclo-simulator and the method according to the invention allow setting (i.e. setting, adjusting) the frame of a real bike as a function of the anthropometric but also dynamic characteristics (i.e. forces which he/she is able to generate on the bike) of the user/cyclist in the best and most objective way possible, so as to possibly also be a valid aid for operators in the field, such as posturologists.

The Applicant has verified that the cyclo-simulator and the method according to the invention allow executing such custom-setting in the simplest and quickest way possible.

The measuring device allows detecting the anthropometric measures of the cyclist in order to then calculate a geometry of the test frame (position of the saddle and handlebar) and then consequently adjust said test frame.

The test frame allows varying the position of saddle and handlebar, also in an automatic manner and also dynamically (while the cyclist is pedaling), in order to be adapted to any setting that one wishes to test. In particular, the dynamic adjustment carried out while the cyclist is pedaling is executed in a sufficiently slow and linear manner so as to avoid disturbing the cyclist.

The base with the elastic constraints and the ergometric brake allow simulating the conditions, even variable, of the road while the cyclist is pedaling, both using the test frame and the real bike attached to the ergometric brake. Indeed, the cyclo-simulator is capable of simulating the conditions of the road by generating reactions to the movement and oscillating on the base thereof.

The operators of the field are therefore able to detect any irregular movement, indicating possible imbalance by means of the direct observation of the cyclist who is pedaling and/or by analyzing the data acquired by the control unit and/or by relying on the calculation of performance parameters which the control unit is capable of executing.

Further characteristics and advantages will be clearer from the detailed description of a preferred but not exclusive embodiment of a cyclo-simulator and of a method for setting a bicycle in accordance with the present invention.

### Description of the drawings

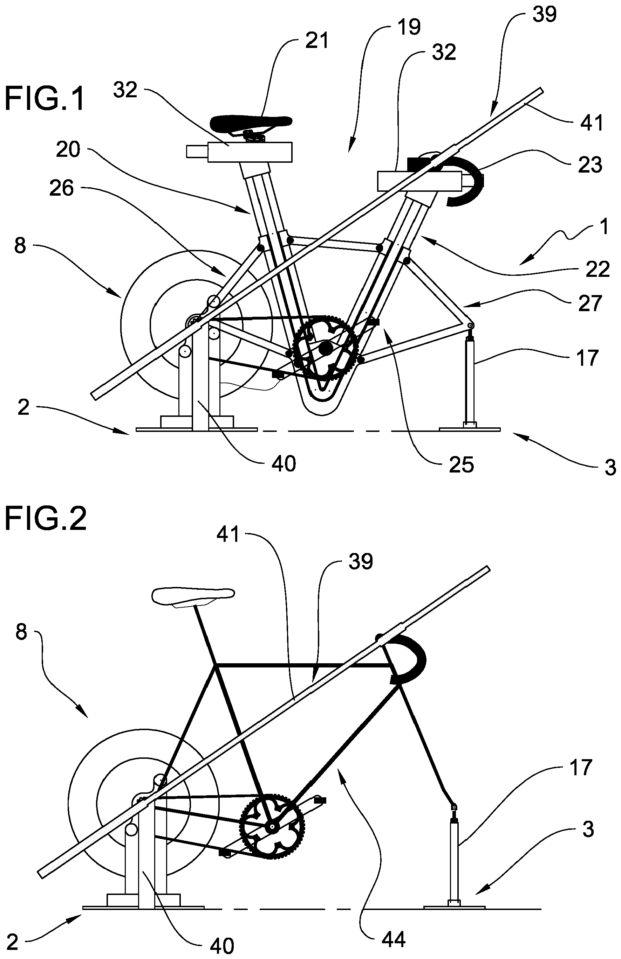

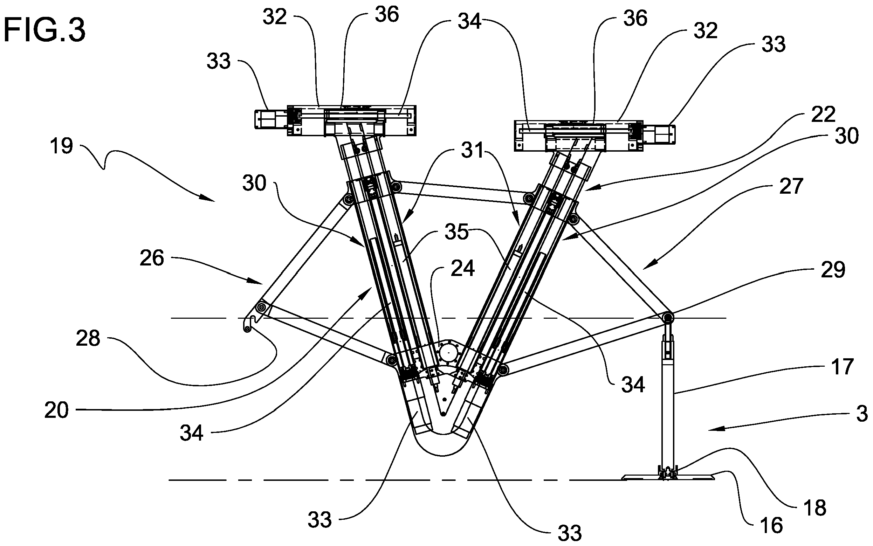

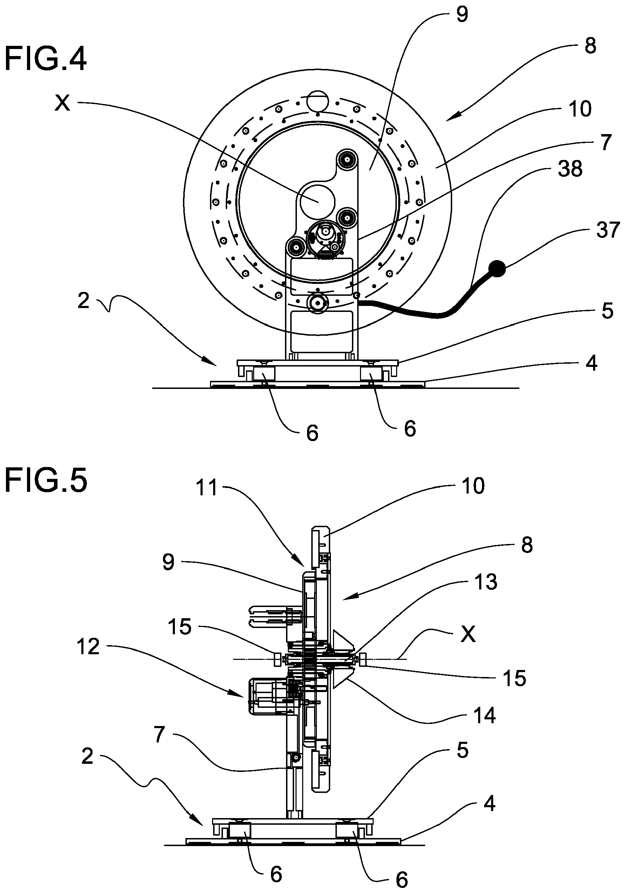

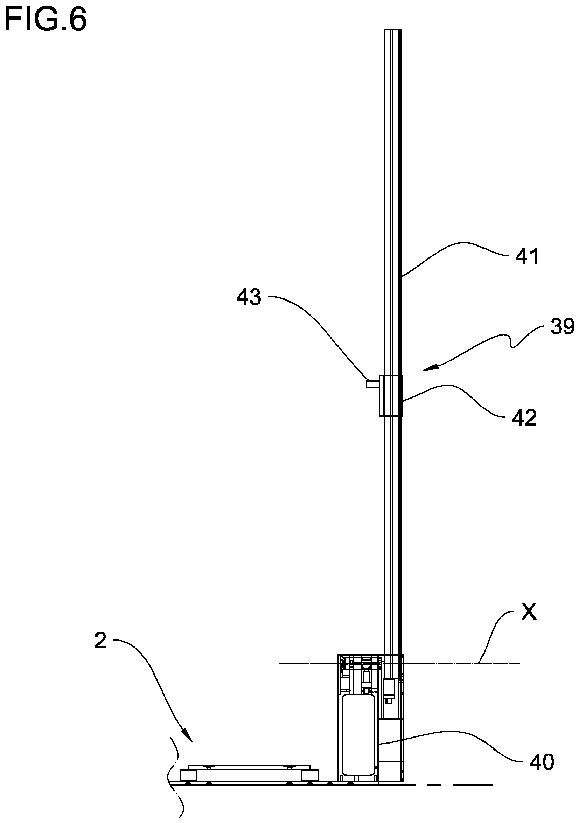

Such description will be set forth hereinbelow with reference to the set of drawings, provided only as a non-limiting example, in which:
▪ figure 1 illustrates a side elevation view of a cyclo-simulator according to the invention in an operating configuration;
▪ figure 2 illustrates a side elevation view of several elements of the cyclo-simulator of figure 1 associated with a real bike;
▪ figure 3 illustrates an enlarged and partially sectional view of a test frame belonging to the cyclo-simulator of figure 1;
▪ figures 4 and 5 illustrate respective views of a base and of an ergometric brake belonging to the cyclo-simulator of figure 1;
▪ figure 6 illustrates a measuring device belonging to the cyclo-simulator of figure 1.

### Detailed description

With reference to the abovementioned figures, reference number 1 overall indicates a cyclo-simulator according to the invention.

The cyclo-simulator 1 comprises a base 2 and an auxiliary base 3 intended to be rested on the ground.

The base 2 comprises a first element 4, preferably defined by a plate as illustrated in figures 4 and 5, configured to be directly rested on the ground, and a second element 5, it too preferably plate-like, mounted on the first element via constraints of elastic elements 6. The elastic constraints are such to allow the second element 5 to oscillate with respect to the first 4 according to multiple degrees of freedom.

A fixed frame 7 is mounted on the second element 5 which is vertically extended from said second element 5 and bears an ergometric brake 8. Such ergometric brake 8 is for example of the type described in the Italian patent application No. MI2014A001014 on behalf of the same Applicant.

The ergometric brake comprises a stator 9 coaxial with a rotation axis "X" and attached to the fixed frame 8 and a rotor 10 rotatably around said rotation axis "X" and arranged alongside and around the stator 9. Braking means are operatively active between the rotor 10 and the stator 9. For example, the braking means 11, not illustrated in detail, are arranged at a radially outer surface of the stator 9 and at a radially inner surface of the rotor 10 that are facing each other. For example, the braking means 11 are of the contactless type, preferably of magnetic and/or electromagnetic type, for example of motor-torque type and/or of parasite current type and/or of the type with energy dispersion via magnetic hysteresis. An actuator 12 is operatively active between the rotor 10 and the stator 9 in order to move the rotor axially with respect to the stator and vary the braking force offered by the ergometric brake 8. The actuator 12 allows moving the stator 9 and the rotor 10 with respect to each other, so as to vary the area of a conductive member subjected to the magnetic field and adjust the magnetic force of the braking means. The actuator 12 defines control devices for the ergometric brake 8 in order to vary the force exerted by the ergometric brake 8.

As is visible in figure 5, the ergometric brake 8 comprises a shaft 13 coaxial with the rotation axis "X" and integrally mounted on the fixed frame 7. The rotor 10 is mounted such that it can rotate, e.g. by means of bearings, on the fixed shaft 13 and bears a plurality of pinions 14 (only schematically represented) which rotate integral with the rotor 10. Opposite ends of the shaft 13 axially project from the ergometric brake 8 and comprise hooking/unhooking devices 15 configured to allow removably connecting a rear fork of a frame of a bicycle.

The ergometric brake 8 also comprises a torsional load cell (part of the rotor and/or of the stator and not illustrated in the enclosed figures) configured to detect the torque exchanged between the rotor 10 and the stator 9.

The auxiliary base 3 is configured to support a front fork of the frame of a bicycle. The auxiliary base 3 comprises a first plate-like element 16 directly restable on the ground and a second element 17 mounted on the first element 16 and configured to support the abovementioned front fork. In the illustrated embodiment, the second element 17 is a kind of vertical bar. The second element 17 is attached to the first element 16 by means of a hinge 18 such to be able to oscillate with respect to said first element 16 according to one or more degrees of freedom.

The cyclo-simulator 1 comprises a test frame 19 visible in more detail in figure 3. The test frame 19 comprises a first upright 20 bearing a saddle 21 and a second upright 22 bearing a handlebar 23. The first and the second upright 20, 22 are arranged and mutually connected so as to form a V shape which, when the test frame 19 is correctly oriented in order to be used, has a vertex directed downward. The test frame 19 also comprises a connection structure 24 which connects the first with the second upright 20, 22 at the vertex of the V and is configured to bear a bottom bracket provided with a pedal assembly 25.

A rear fork 26 is connected to the first upright 20 and a front fork 27 is connected to the second upright 22. The rear fork 26 and the front fork 27 have respective ends 28, 29 configured to be respectively attached to the hooking/unhooking devices 15 of the shaft 13 and to an upper terminal end of the second element 17 of the auxiliary base 3.

The test frame 19 can therefore be removably mounted on the base 2 and on the auxiliary base 3 and, when the test frame 19 is mounted on the base 2, the pedal assembly 25, more precisely a crown of the pedal assembly, can be operatively connected to the pinions 14 of the ergometric brake 8 by means of a conventional chain.

The first upright 20 comprises a first tubular element 30 and a second tubular element 31 parallel to and integral with the first. Each of said first and second tubular element 30, 31 comprises an external tube in which an internal tube is housed. The external tubes are fixed with respect to the front 27 and rear 26 forks and with respect to the connection structure 24. The internal tubes have terminal ends that project from upper ends of the external tubes and can be made to slide in the external tubes, as will be explained hereinbelow. Such terminal ends bear the saddle 21 of the test frame 19. More particularly, such terminal ends bear a box-like structure 32 in turn bearing the saddle 21.

The second upright 22 is structurally similar to the first 20, i.e. it comprises a first tubular element 30 and a second tubular element 31 parallel to and integral with the first. The terminal ends of the respective internal tubes bear the handlebar 23 of the test frame 19. More particularly, such terminal ends bear a box-like structure 32, like that described above for the saddle 21, in turn bearing the handlebar 23.

The test frame 19 is also provided with adjusting devices of motorized type configured to adjust the relative position of the saddle 21 and/or of the handlebar 23 with respect to the pedal assembly 25.

The abovementioned adjusting devices comprise first adjusting devices partially housed in the first upright 20 and operatively connected to the saddle 21 in order to move the saddle 21 along a direction substantially parallel to the longitudinal extension of the first upright 20.

The first adjusting devices comprise a motor 33 mounted, by means of a quick coupling, on a lower end of the external tube of the first tubular element 30 in a manner so as to project from said lower end and be able to be easily released. The motor 33 bears and rotates a worm screw 34 which is extended within the first tubular element 30 and is engaged in an internal thread (nut screw) of the respective internal tube. The motor unit formed by the motor 33 and by the worm screw 34 can therefore be extracted from the test frame 19.

The first adjusting devices comprise a displacement transducer 35 inserted in the second tubular element 31 and attached to the respective external tube and to the respective internal tube so as to detect the relative movement of the two. The displacement transducer 35 projects from a lower end of the external tube of the second tubular element 31 and is attached such that it can be easily removed from said second tubular element 31.

The adjusting devices comprise second adjusting devices partially housed in the second upright 22 and operatively connected to the handlebar 23 in order to move the handlebar 23 along a direction substantially parallel to the longitudinal extension of the second upright 22. As is visible in figure 3, the second adjusting devices comprise the same components as the first adjusting elements.

The adjusting devices comprise third adjusting devices operatively interposed between the saddle 21 and the first upright 20 and configured to move the saddle 21 along a direction transverse to the longitudinal extension of the first upright 20, that is - when the test frame 19 is correctly mounted - along a substantially horizontal direction.

The third adjusting devices comprise a nut screw 36 mounted on the terminal ends of the respective internal tubes of the first upright 20. The abovementioned box-like structure 32, which bears the saddle 21, also bears a motor 33 with a worm screw 34 similar to those described above. The motor 33 is attached to the box-like structure 32 outside the same and is connected by means of a quick coupling such that it can be easily released. The worm screw 34 is extended within the box-like structure 32 and is engaged with a thread of the abovementioned nut screw 36. The nut screw 36 is therefore arranged in the box-like structure 32.

The third adjusting devices comprise a displacement transducer not illustrated in detail and integrated within the box-like structure 32.

The adjusting devices comprise fourth adjusting devices operatively interposed between the handlebar 23 and the second upright 22 and configured to move the handlebar 23 along a direction transverse to the longitudinal extension of the second upright 22, in a manner analogous to the saddle 21.

As is visible in figure 3, the fourth adjusting devices comprise the same components as the third adjusting elements.

The cyclo-simulator 1 also comprises sensors installed on the or associated with the pedal assembly 25 and configured for detecting at least operating parameters of said cyclo-simulator 1. Such sensors, used in addition or as an alternative to the torsional load cell of the ergometric brake 8, for example comprise strain gauges applied in the or on the pedal cranks, a proximity/cadence sensor operatively active at the inertial wheel 10 and a second proximity/cadence sensor 37 (illustrated in figure 4) borne by the fixed frame 7 but operatively active at the pedal assembly 25. Such proximity/cadence sensor 37 is borne for example by an articulated and orientable arm 38.

The cyclo-simulator 1 also comprises a measuring device 39 that can be attached to the base 2 and is configured to detect and/or indicate the position of points on a cyclist and/or on the frame of a real bike and/or on the test frame 19.

The measuring device 39 is for example of the type described in the Italian patent application No. MI2014A001154 on behalf of the same Applicant.

The measuring device 39 comprises a support element 40 removably attachable to the base 2 and a rod 41 hinged to the support element 40 around a rotation axis which, for example, when the support element 40 is attached to the base 2 coincides with the rotation axis "X" of the rotor 10.

The measuring device 39 comprises a first sensor, not illustrated, configured to measure a tilt of the rod 41, a slider 42 slidably mounted on the rod 41 and bearing a laser pointer 43, oriented in a direction parallel to the rotation axis "X", a second sensor, not illustrated, configured to measure a distance of the laser pointer 43 from a reference point along the longitudinal extension of the rod 41. Such sensors are preferably of plug-in type in order to facilitate the maintenance/substitution.

The cyclo-simulator 1 comprises an electronic control unit, e.g. a computer, which manages said cyclo-simulator. The electronic control unit, not illustrated, is operatively connected, by means of wiring and/or wireless, to the load cell and to the actuator 12 of the ergometric brake 8, to the sensors and to the laser of the measuring device 39, to the sensors installed on the or associated with the pedal assembly 25, to the adjusting devices of the saddle 21 and of the handlebar 23. The control unit comprises a processor and a memory in which an algorithm lies that is configured to manage the input signals, execute calculations and drive the devices connected thereto.

The operation of the cyclo-simulator 1 according to the invention is described hereinbelow. During use and also in accordance with the method for setting a bicycle of the present invention, the cyclo-simulator 1 is used by an operator for setting a real bicycle as a function of the characteristics of the cyclist who must use it.

In a first step, the test frame 19 is mechanically released from the base 2 and from the ergometric brake 8 but operatively connected to the control unit (wireless or with wiring). The operator mounts on the base the measuring device 39 while this too is operatively connected to the control unit (wireless or with wiring). While the cyclist is positioned standing in front of the base 2 and rod 41 of the measuring device 39, the operator maneuvers the slider 42, making it slide on the rod 41 and tilts the rod 41 in a manner so as to point with the laser the cyclist reference points, one after the other. For each point, the operator presses a key placed on the slider 42 and the control unit acquires the coordinates of such point by means of signals coming from the first and from the second sensor of the measuring device 39.

The control unit, by means of the detected coordinates, calculates the anthropometric measures of the cyclist and calculates a first set of measures of the test frame 19 as a function of the anthropometric measures of the cyclist.

The control unit automatically provides to adjust, by driving the adjusting devices, the relative position of the saddle 21 and/or handlebar 23 of the test frame 19 in accordance with the first set of calculated measures.

The operator provides for dismounting the measuring device from the base 2 and for mounting the test frame 19 on the base 2 and on the auxiliary base 3 and for connecting the pedal assembly 25 to the ergometric brake 8.

The cyclist climbs on the test frame 19 and starts to pedal while the control unit manages the ergometric brake 8 in order to simulate a preset route on road, for example by varying the force exerted by the ergometric brake. During pedaling, the operating parameters are detected, such as forces, moments, powers, pitching, yaw, roll, etc..

The control unit sets various measures of the test frame 19 by automatically modifying the position of the saddle 21 and of the handlebar 23 during pedaling and/or at the end of the test. Alternatively, it is also possible to modify the positions of the saddle 21 and handlebar 23 as a function of the experience of the operator who reads the operating parameters. Such procedure can be repeated multiple times up to obtaining definitive positions of the saddle 21 and handlebar 23.

The operator therefore provides for dismounting the test frame 19 from the base 2 (by operating on the hooking/unhooking devices 15), from the ergometric brake 8 and from the auxiliary base 3, and for mounting in its place the frame 44 of a real bike intended for the cyclist by connecting the bottom bracket to the ergometric brake 8.

The operator provides for once again mounting the measuring device 39 on the base 2 and he/she adjusts the relative position of the saddle and/or of the handlebar of the real bike 44 with respect to the pedal assembly of the real bike 44 by means of indications supplied by the measuring device 39.

For such purpose, the control unit is configured to calculate the differences between the calculated measures/positions to be transferred onto the real bike 44 and the coordinates of the actual position of the laser pointer 43. For each new measure of distance and tilt of a reference point of the bike, the control unit is configured to signal the canceling of the differences when the laser pointer 43 is manually brought into the position corresponding to said measures. In this manner, the operator knows exactly how to move and to which point to bring the saddle 21 and/or the handlebar 23 of the real bike 44.

The cyclist can at this point test the real bike 44 connected to the ergometric brake with the same simulation tested with the test frame 19.

Hence, it is possible to detect the operating parameters previously detected with the test frame while the cyclist is pedaling on the real bike and then compare such operating parameters of the real bike with those of the cyclo-simulator with the test frame in order to possibly execute a check.

### List of elements

- 1: cyclo-simulator
- 2: base
- 3: auxiliary base
- 4: first element
- 5: second element
- 6: elastic constraints
- 7: fixed frame
- 8: ergometric brake
- 9: stator
- 10: rotor
- 11: braking means
- 12: actuator
- 13: shaft
- 14: pinions
- 15: hooking/unhooking devices
- 16: first plate-like element
- 17: second element
- 18: hinge
- 19: test frame
- 20: first upright
- 21: saddle
- 22: second upright
- 23: handlebar
- 24: connection structure
- 25: pedal assembly
- 26: rear fork
- 27: front fork
- 28: rear fork end
- 29: front fork end
- 30: first tubular element
- 31: second tubular element
- 32: box-like structure
- 33: motor
- 34: worm screw
- 35: displacement transducer
- 36: nut screw
- 37: proximity/cadence sensor
- 38: orientable arm
- 39: measuring device
- 40: support element
- 41: rod
- 42: slider
- 43: laser pointer
- 44: real bike frame

## Claims

1. Cycle-simulator, comprising:
a base (2) to be rested on the ground;
an ergometric brake (8) mounted on the base (2);
a test frame (19) comprising a pedal assembly (25), a saddle (21) and a handlebar (23) and adjusting devices (33, 34, 35, 36) for adjusting the relative position of said saddle (21) and handlebar (23) with respect to the pedal assembly (25); wherein the test frame (19) is removably mounted on the base (2) and wherein, when the test frame (19) is mounted on the base (2), the pedal assembly (25) is operatively connected/connectable to said brake (8);
wherein the ergometric brake (8) or the base (2) comprises hooking/unhooking devices (15) configured to mount in a removable manner the test frame (19) on the base (2) and configured to removably mount a frame of a real bike (44) on the base (2) in place of the test frame (19) in such a way to connect a pedal assembly of the real bike (44) to said brake (8).

2. Cycle-simulator according to claim 1, comprising a measuring device (39) attached or attachable to the base (2) and configured to detect and/or indicate the position of points on a cyclist and/or on the real bike frame (44) and/or on the test frame (19).

3. Cycle-simulator according to claim 2, comprising a control unit operatively connected at least to the measuring device (39) and configured to calculate measures of the test frame (19) as a function of anthropometric measures of the cyclist detected by said measuring device (39); wherein the adjusting devices (33, 34, 35, 36) are motorized and wherein the control unit is operatively connected to said adjusting devices (33, 34, 35, 36) for automatically adjusting the relative position of said saddle (21) and/or handlebar (23) with respect to the pedal assembly (25) according to the calculated measures of the test frame (19).

4. Cycle-simulator according to claim 3, comprising at least one sensor (37) configured to detect at least one operating parameter of the cycle-simulator (1) and wherein the control unit is operatively connected to said at least one sensor (37) for automatically regulating the relative position of said saddle (21) and/or handlebar (23) with respect to the pedal assembly (25) according to said at least one detected operating parameter.

5. Cycle-simulator according to claim 2, 3 or 4, comprising control devices (12) of the ergometric brake (8) and wherein the control unit is operatively connected to said control devices (12) and is configured to vary the force exerted by the ergometric brake (8) in order to simulate a route.

6. Cycle-simulator according to one of the preceding claims, wherein each of the adjusting devices (33, 34, 35, 36) comprises a motor unit (33, 34) and a displacement transducer (35, 36), wherein at least the motor unit (33, 34) is removable from the test frame (19).

7. Cycle-simulator according to the preceding claim, wherein the motor unit (33, 34) comprises a motor (33) and a worm screw (34), wherein the worm screw (34) is housed in the test frame (19) and the motor (33) is external to the test frame (19).

8. Cycle-simulator according to one of the preceding claims, wherein the test frame (19) comprises a first upright (20) bearing the saddle (21) and a second upright (22) bearing the handlebar (23), wherein the first and the second uprights (20, 22) form a V shape, wherein the pedal assembly (25) is positioned at a vertex of the V.

9. Cycle-simulator according to the preceding claim when depending on claim 7, wherein each of said first and second uprights (20, 22) comprises a first tubular element (30) which houses internally the worm screw (34) of the respective motor unit (33, 34) and a second tubular element (31), parallel to the first, which houses internally the displacement transducer (35) of the respective motor unit (33, 34), wherein the motor (33) protrudes from the first tubular element (30) at an opposite end to that bearing the saddle (21) or the handlebar (23).

10. Method for setting a bicycle using the cycle-simulator of one or more of the preceding claims, comprising:
▪ detecting anthropometric measures of a cyclist through the measuring device (39);
▪ calculating, preferably through the control unit, measures of the test frame (19) as a function of the anthropometric measures of the cyclist;
▪ adjusting through the motorized adjusting devices (33, 34, 35, 36) the relative position of the saddle (21) and/or handlebar (23) with respect to the pedal assembly (25) according to the calculated measures of the test frame (19);
▪ detecting at least one operating parameter of the cycle-simulator (1) through said at least one sensor (37) while the cyclist is pedaling on the test frame (19);
▪ adjusting through the motorized adjustment devices (33, 34, 35, 36) the relative position of the saddle (21) and/or handlebar (23) with respect to the pedal assembly (25) according to said at least one detected operating parameter;
▪ substituting, by operating on the hooking/unhooking devices (15), the test frame (19) with the frame of a real bicycle (44);
▪ adjusting the relative position of the saddle (21) and/or handlebar (23) with respect to the pedal assembly of the real bike (44) using indications supplied by the measuring device (39), wherein said positions correspond to those of the test frame (19);
▪ optionally, detecting at least one parameter of the cycle-simulator operation (1) while the cyclist is pedaling on the real bike (44).
